# EUROPEAN PATENT SPECIFICATION

(11) **EP 2 221 243 B1**
(45) Date of publication and mention of the grant of the patent: **30.03.2016**
(21) Application number: 10151067.5
(22) Date of filing: 19.01.2010
(51) Int. Cl.: B62K 11/10, F16H 57/04

(54) **Motorcycle**
Motorrad
Motocyclette

(30) Priority: 19.02.2009 JP 2009036393; 15.09.2009 JP 2009213129
(43) Date of publication of application: 25.08.2010
(73) Proprietor: Yamaha Hatsudoki Kabushiki Kaisha, Shizuoka-ken Shizuoka 438-8501 (JP)
(72) Inventor: Mochizuki, Kan, Shizuoka-ken 438-8501 (JP); Hirano, Fumio, Shizuoka-ken 438-8501 (JP); Kurihara, Kouji, Shizuoka-ken 438-8501 (JP)
(74) Representative: Zimmermann, Tankred Klaus

(56) References cited:
- EP-A1- 0 408 074
- EP-A1- 1 864 899
- JP-A- 3 273 982
- JP-A- 11 171 079
- US-A- 5 613 569
- US-A1- 2007 251 744

## Description

### Technical Field

The present invention relates to a motorcycle, particularly to a motorcycle provided with a belt continuously variable transmission for transmitting a driving force from an engine to a rear wheel.

### Background Art

In many cases, the scooter type motorcycles are provided with a unit swing type engine. In the unit swing type engine, a driving unit is pivotably supported by a frame. The driving unit comprises an engine and a belt continuously variable transmission (belt CVT). In addition, the belt CVT is accommodated in a power transmission case especially for preventing dust, mud and the like from attaching to its belt.

The belt CVT is mainly composed of a driving pulley, a driven pulley and an endless belt wrapped around the pulleys. In this structure, a cooling fan is provided in the driving pulley. The cooling fan is configured to be rotated in conjunction with a rotation of the driving pulley. By the rotation of the cooling fan, external air is introduced in the interior of the power transmission case through a cooling duct. Accordingly, the belt is cooled down.

A variety of structures have been proposed for cooling the belt as described above. Especially, the scooter type vehicles, provided with a flat footboard, often have difficulties in disposing an external air inlet of the cooling duct at the front side of the vehicle.

In response to this, a scooter type motorcycle as described in JP 11-171079 A (see also the corresponding Japanese Patent No. 3562279) has been produced. In this scooter type motorcycle a closed space is produced by a cover, a seat and a rear fender. The closed space accommodates a goods storage room, and an external air inlet of a cooling duct is disposed behind the goods storage room.

The scooter type motorcycle, disclosed in JP 11-171079 A, is a so-called large scooter that includes sufficient space behind a rider's seat. Therefore, the external air inlet of the cooling duct can be disposed in the space behind the seat without particularly devising the arrangement of components and the like.

When the closed space as described in JP 11-171079 A is produced in a small scooter, however, a rear part of the vehicle is required to have a large size. Accordingly, it is difficult to compactly form the entire vehicle.

US 5613569 A discloses an electrically powered motor-scooter including a scooter body having a step floor, a seat, a body cover mounted under the seat, and a storage compartment located below the seat. A battery case is mounted under the step floor which has at least one opening therein which is open to the surrounding air for allowing the flow of air therethrough. A rear compartment extends below and rearwardly of the storage compartment and extends rearwardly of the battery case. The storage compartment forms an upper wall of the rear compartment, and the body cover forms sidewalls of the rear compartment. A portion of the rear compartment is open to the surrounding air. A fan is mounted in a forward portion of the rear compartment for producing a movement of cooling air between the rear compartment and the battery case. The cooling air passes through the rear compartment and the opening in the battery case. A duct is connected between the fan and the battery case which forms a passage for the cooling air to pass therethrough. A control apparatus is mounted in the rear compartment rearwardly of the fan for controlling a drive motor of the electrically powered motor-scooter.

### Summary of the Invention

It is an object of the present invention to effectively cool down a belt CVT without increasing the entire vehicle size.
This object is achieved by a motorcycle according to claim 1.

A motorcycle according to the present invention includes a frame, a driving unit, a seat, a storage box, a lock mechanism, a pair of right and left side covers, a tail light unit and a cooling duct. The frame extends in a longitudinal direction of the vehicle. The driving unit is pivotably supported by the frame. The driving unit comprises an engine and a power transmission case accommodating a belt continuously variable transmission configured to transmit the driving force from the engine to a rear wheel. The seat is disposed above the engine. The seat is configured to be opened/closed. The storage box is disposed under the seat. The lock mechanism is disposed behind the storage box. The lock mechanism is configured to lock the seat to the frame. The side covers cover at least right and left lateral sides of the storage box. The tail light unit is disposed behind the lock mechanism. At least a part of the tail light unit is disposed between the side covers. The cooling duct has a first end and a second end. The first end of the cooling duct is connected to the power transmission case, whereas the second end of the cooling duct has an opening. The opening is positioned between the lock mechanism and the tail light unit within a space surrounded by the storage box, the side covers and the tail light unit.

In the motorcycle, a closed space is formed by the storage box, the side covers and the tail light unit. The closed space is positioned behind the storage box. Additionally, the opening of the cooling duct is disposed within the closed space. Specifically, the opening is disposed within a space between the lock mechanism of the seat and the tail light unit. External air is received (inhaled) through the opening, and the inhaled air is sent to the belt continuously variable transmission through the cooling duct. Thus, the belt continuously variable transmission is cooled down by the inhaled air.

In general, the scooter motorcycle is provided with a space between the storage box and the tail light unit. The space is used for disposing the lock mechanism configured to lock the seat covering the storage box to the frame. The space is also used when an exchange of a bulb of the tail light unit is performed. Furthermore, the space is used for disposing a harness of the tail light unit. The space is thus essential for disposing the lock mechanism and for performing a maintenance work.

In view of the above, inventors of the present invention discovered an arrangement of the opening of the cooling duct using the space provided between the storage box and the tail light unit. With this arrangement, it is not necessary to provide a special space for disposing the opening of the cooling duct. Therefore, it is possible especially for a small scooter to effectively dispose the opening of the cooling duct without increasing the entire vehicle size.

According to the present invention, the belt CVT can be effectively cooled down without increasing the entire vehicle size.

### [Brief Description of the Drawings]

[FIG.1] FIG.1 is a side view of a scooter type motorcycle according to an embodiment of the present invention.
[FIG.2] FIG.2 is a cross-sectional plan view of a belt continuously variable transmission.
[FIG.3] FIG.3 is a detailed cross-sectional view for illustrating a rear space positioned behind a storage box.
[FIG.4] FIG.4 is a cross-sectional plan view of the rear space positioned behind the storage box.
[FIG.5] FIG.5 is an oblique view of the rear space.
[FIG.6] FIG.6 is a side view of a cooling duct.
[FIG.7] FIG.7 is a plan view of the rear space.
[FIG.8] FIG.8 is a side view of a rear part of a vehicle according to a second embodiment of the present invention.
[FIG.9] FIG.9 is a plan view of the rear part of the vehicle according to the second embodiment of the present invention.
[FIG.10]FIG.10 is a side view of a rear part of a vehicle according to a third embodiment of the present invention.
[FIG. 11]FIG. 11 is a plan view of the rear part of the vehicle according to the third embodiment of the present invention.

### [First Embodiment]

### <Entire Structure>

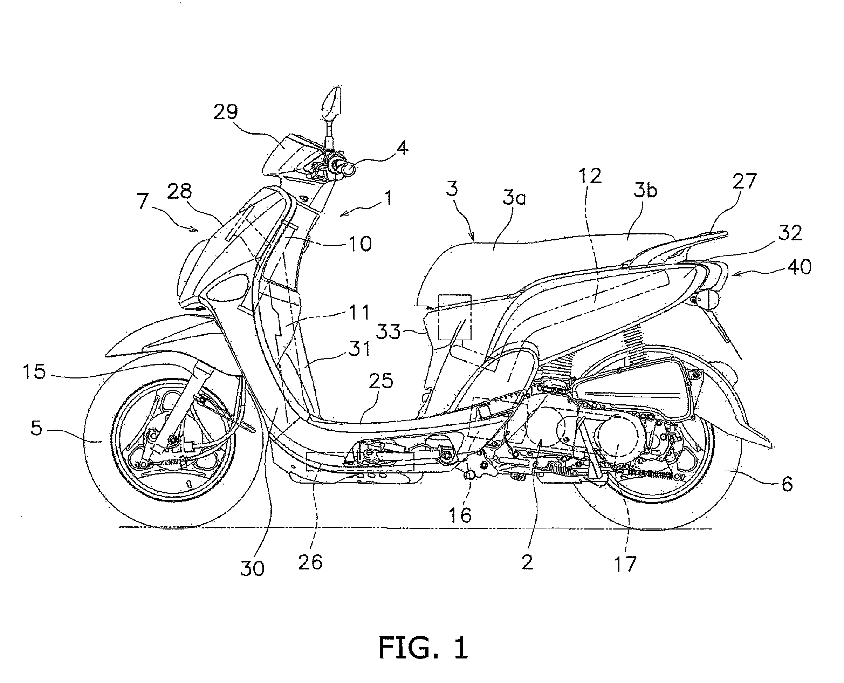

FIG.1 illustrates a scooter type motorcycle according to a first embodiment of the present invention. The motorcycle is mainly composed of a frame 1, a driving unit 2, a seat 3, a handle 4, a pair of front and rear wheels 5, 6 and a cover 7. The frame 1 extends in a longitudinal direction of the vehicle.

The frame 1 includes a head pipe 10, a front frame 11 and a pair of right and left rear frames 12 (FIG.1 illustrates only the left-side rear frame). A steering shaft is rotatably inserted into the head pipe 10. A front fork 15 is attached to the bottom end of the steering shaft, whereas the handle 4 is fixed to the top end of the steering shaft. The front wheel 5 is rotatably mounted to the tip of the front fork 15. The front end (i.e., the top end) of the front frame 11 is connected to the head pipe 10. In a side view, the front frame 11 extends from the head pipe 10 in a rearwardly downward direction. The front end of the respective rear frames 12 is connected to a lower part of the front frame 11. A front section of the respective rear frames 12 extends from the front frame 11, whereas a rear section thereof extends in a rearwardly upward direction.

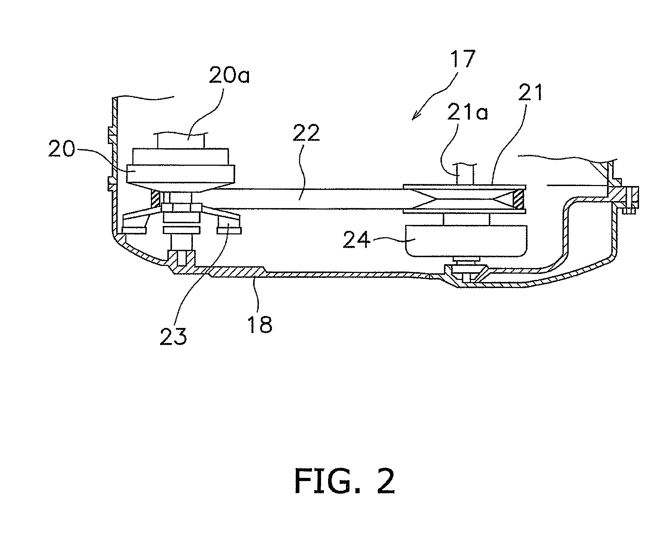

The driving unit 2 is pivotably supported by the rear frames 12. The driving unit 2 is composed of an engine 16 and a power transmission case 18 (see FIG. 2) in which a belt continuously variable transmitter (belt CVT) 17 is accommodated. The belt CVT 17 is configured to transmit the driving force from the engine 16 to the rear wheel 6.

The transmission case 18 blocks dust, mud and the like from attaching to the belt CVT 17. The belt CVT 17 is mainly composed of a driving pulley 20, a driven pulley 21 and an endless belt 22 wrapped around the pulleys 20, 21. Additionally, a cooling fan 23 is provided at the driving pulley 20. In response to a rotation of the cooling fan 23, the pressure in the surrounding of the cooling fan 23 becomes less than the standard atmosphere.

In the belt CVT 17, the driving pulley 20 is configured to rotate by the driving force from the engine 16. The driving pulley 20 is supported by an input shaft 20a. The input shaft 20a is configured to rotate with a crank shaft of the engine 16. On the other hand, the driven pulley 21 is supported by an output shaft 21a. The output shaft 21a is configured to transmit the driving force to the rear wheel 6. Furthermore, a centrifugal clutch mechanism 24 is disposed between the driven pulley 21 and the rear wheel 6. Rotation of the driving pulley 20 is transmitted to the driven pulley 21 through the endless belt 22.

The seat 3 is disposed above the driving unit 2. The seat 3 is composed of a rider seat section 3a and a tandem seat section 3b. The sections 3a, 3b are integrally formed, and the tandem seat section 3b is formed behind the rider seat section 3a. A hinge (not illustrated in the figure) is attached to the front end of the seat 3. The seat 3 is configured to be vertically moveable about the hinge as a fulcrum. In other words, the rear part of the seat 3 can be opened/closed. An assistive grip 27 is disposed behind the tandem seat section 3b. The assistive grip 27 is fixed to the rear frames 12.

Additionally, a space is produced in front of the seat 3. A footboard 25 is formed below the space. The footboard 25 allows a rider to put his/her feet in a side-by-side relation. A fuel tank 26 is disposed under the footboard 25.

The cover 7 is a resin member. The cover 7 covers the frame 1 and the handle 4. The cover 7, including the aforementioned footboard 25, is mainly composed of a front cover 28, a handle cover 29, an inner fender 30, a leg shield 31, a rear cover 33 and a pair of right and left side covers 32.

A head light and flashers are disposed in the front cover 28. A meter panel is disposed on the top face of the handle cover 29. The inner fender 30 is disposed below the front cover 28 and covers a space behind of the front wheel 5. The leg shield 31 covers behind of the front frame 11. The rear cover 33 is positioned between the footboard 25 and the seat 3. The rear cover 33, together with the side covers 32, divides a space positioned below the seat 3 into a plurality of sections. The side covers 32 upwardly stand in a position behind the footboard 25, and cover the right and left sides of the space positioned below the seat 3.

In accordance with the present invention, the term "side covers" refers to a section positioned at the lateral sides of the space positioned below the seat 3. This section is composed of parts of the both of the rear cover 33 and the respective side covers 32.

### <Rear Space>

In the scooter type motorcycle of this type, a space exists in a rear part of the space positioned below the seat. The rear space will be hereinafter explained in detail.

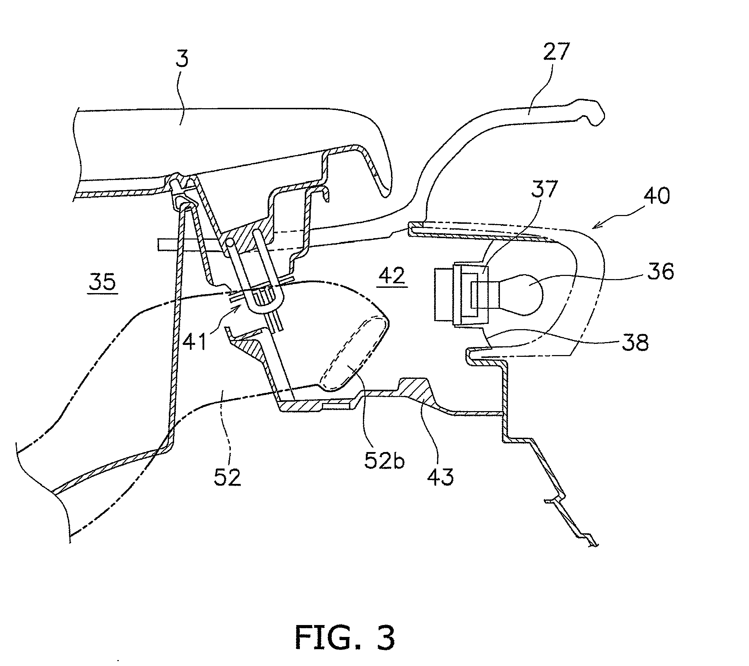

As illustrated in FIG.3, a storage box 35 is formed under the seat 3. The storage box 35 can accommodate a variety of goods such as a rider's helmet. Additionally, a tail light unit 40 is disposed in the rear end of the vehicle. The tail light unit 40 is mainly composed of a light bulb 36, a holder 37 for holding the light bulb 36, and a reflecting mirror 38. The storage box 35 and the tail light unit 40 are longitudinally disposed one behind the other.

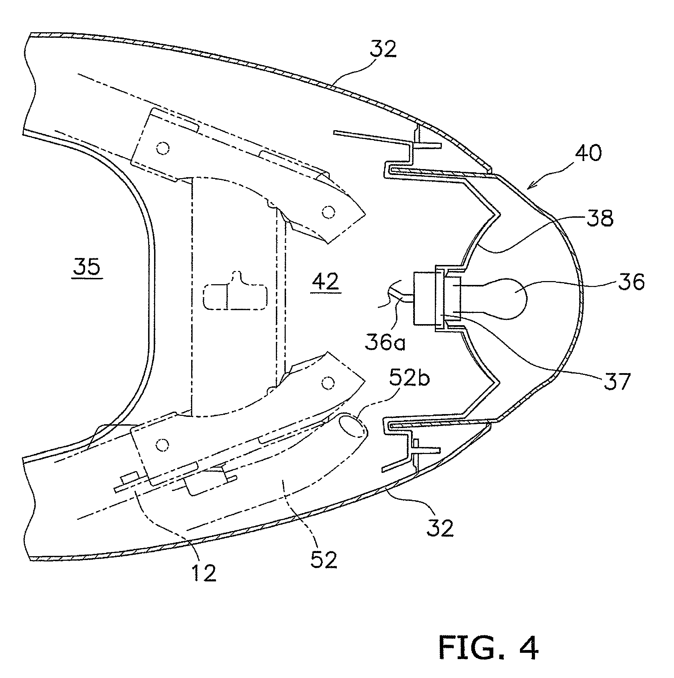

As illustrated in FIG.4, the side covers 32 are laterally positioned on the right and left sides of the storage box 35. Additionally, the tail light unit 40 is positioned on the back of the side covers 32. The rear ends of the side covers 32 and the tail light unit 40 form a continuous curved surface. Furthermore, at least a part of the tail light unit 40 is transversely positioned between the side covers 32.

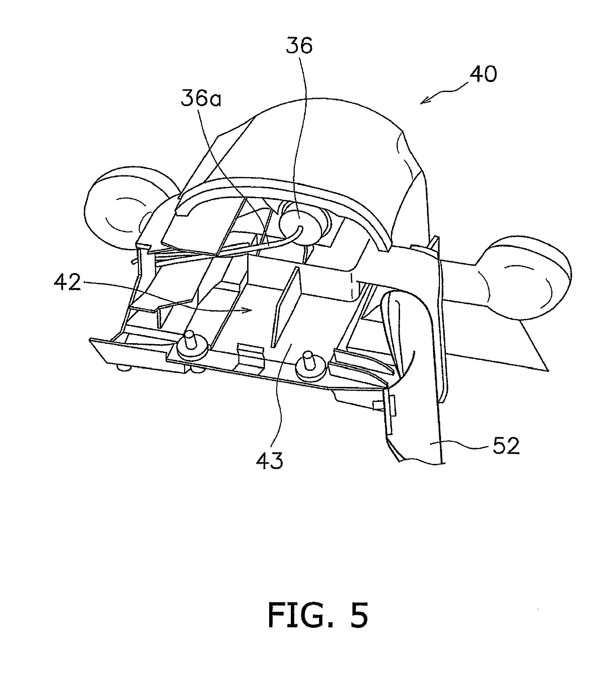

As illustrated in FIG.3, the top of the accommodation box 35 is covered with the seat 3. A lock mechanism 41 is disposed below the rear end of the seat 3. In other words, the lock mechanism 41 is disposed behind the storage box 35. The lock mechanism 41 is configured to lock/unlock the seat 3 to/from the frame 1 for opening/closing it. The structure requires a space for disposing the lock mechanism 41 behind the storage box 35. Moreover, the light bulb 36 is provided in the tail light unit 40. Accordingly, a space is necessary in front of the tail light unit 40 not only for performing a maintenance work (e.g., exchange of the light bulb 36) but also for disposing a wiring 36a to be connected to the light bulb 36 (see FIGS.4 and 5).

Thus, a space (rear space) 42 is ensured between the storage box 35 and the tail light unit 40 for disposing the lock mechanism 41 and the wiring of the light bulb 36, and for allowing a maintenance work to be carried out. Thus, the rear space 42 is a closed space. Specifically, its top is enclosed by the front part of the assistive grip 27 whereas its bottom is enclosed by a maintenance cover 43. Furthermore, its right and left sides are laterally enclosed by the side covers 32. The structure is illustrated in FIGS.1, 3 and 4. Also, FIG.5 illustrates the rear space 42 seen from its obliquely front side. In FIG.5, the assistive grip 27, normally disposed above the rear space 42, is taken out of the rear part of the vehicle.

The maintenance cover 43 is detachably attached to the side covers 32 by means of a plurality of screws (not illustrated in the figure) screwed from below. When the exchange of the light bulb 36 is performed, the screws are removed from of the maintenance cover 43 from below, and then the maintenance cover 43 is removed out of the rear part of the vehicle. The structure allows a person to perform exchange of the light bulb 36 using the rear space 42, because he/she can put his/her hand into the rear space 42 from below.

### <Cooling Duct>

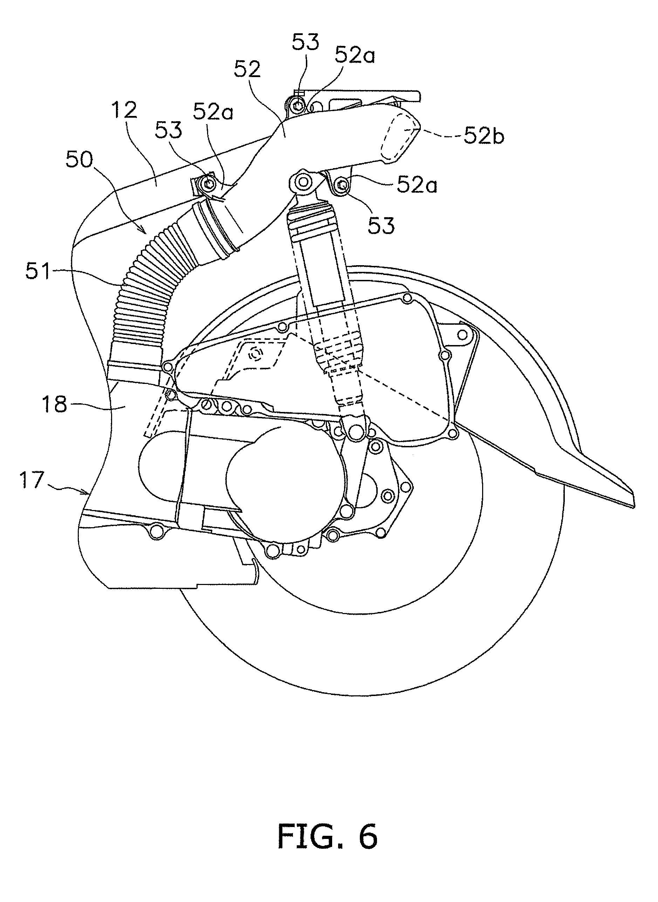

As mainly illustrated in FIG.6, a cooling duct 50 is provided in the vehicle for cooling down the belt CVT 17. The cooling duct 50 is used for introducing external air in the interior of the power transmission case 18 of the belt CVT 17. The cooling duct 50 is composed of an accordion part 51 and a resin duct body 52. The accordion part 51 and the duct body 52 are formed in a tubular shape and are continuous (connected to each other). Accordingly, air can flow through the interior of them.

The bottom end of the accordion part 51 is coupled to the front top of the power transmission case 18, whereas the top end thereof extends in an upwardly rearward direction. The part of the power transmission case 18, connected to the bottom end of the accordion part 51, is positioned above the cooling fan 23 of the belt CVT 17.

The duct body 52 is a vertically-elongated flat tubular member that extends in an upwardly rearward direction. A plurality of externally protruding attachment pieces 52a are formed in the duct body 52. The attachment pieces 52a are fixed to the rear frame 12 by means of a plurality of screws 53. The bottom end of the duct body 52 is coupled to the top end of the accordion part 51 whereas the rear end thereof is open for receiving (inhaling) external air. In short, an opening 52b is formed for inhaling external air. As is shown in FIGS.3 to 5, the opening 52b is positioned in the rear space 42 while being directed toward the transverse center of the vehicle in an obliquely-downward direction.

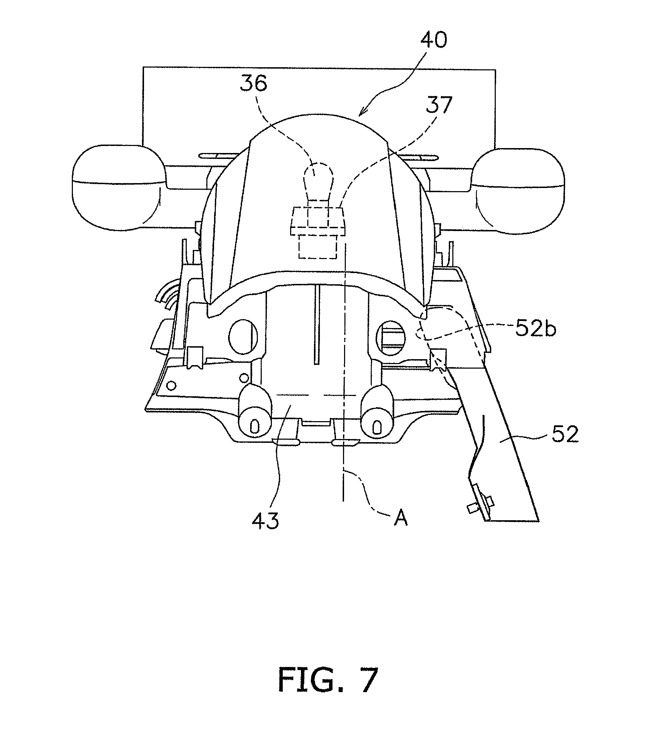

As is shown in FIGS.5 to 7, the opening 52b of the duct body 52 is disposed such that it does not transversely overlap the tail light unit 40 when seen in a plan view. In other words, when the exchange of the light bulb 36 is performed, the light bulb 36 is forwardly pulled out together with the holder 37. To smoothly perform the work without blockage of the duct body 52, the duct body 52 is designed not to overlap with a working space for performing the detachment/attachment of the light bulb 36. Specifically, a line A (see FIG.7) does not overlap with the cooling duct 50 (the duct body 52). The line A forwardly extends from the radial outermost part of the holder 37 for holding the light bulb 36.

As is shown in FIG.4, the opening 52b of the duct body 52 is disposed on the left of the center line of the vehicle. The duct body 52 is positioned on the left of the center line of the vehicle while being positioned on the leftward (outward) of the left rear frame 12. This arrangement produces a large rear space, and a good working condition is accordingly ensured. Furthermore, a muffler (not illustrated in the figure) is disposed on the right side of the vehicle. In other words, the muffler is disposed on the opposite side of the opening 52b of the duct body 52. Therefore, air is not easily warmed by means of heat of the muffler in the vicinity of the duct body 52 and the opening 52b. Consequently, cooling performance of external air is not deteriorated.

Additionally, the cooling duct 50 and the tail light unit 40 do not overlap with each other in a side view. Therefore, the duct body 52 of the cooling duct 50 and the tail light unit 40 can be disposed in transversely close positions. With this structure, the rear part of vehicle can be formed in a transversely compact size.

Furthermore, as is shown in FIG.3, the opening 52b of the duct body 52 is partially positioned above a horizontal line passing through the bottom end of the tail light unit 40 in a side view. With this structure, the rear part of the vehicle can be formed in a vertically compact size.

### <Cooling Operation>

The driving force is transmitted from the engine 16 to the driving pulley 20 of the belt CVT 17 via the input shaft 20a. Then, rotation of the driving pulley 20 is transmitted to the driven pulley 21 via the belt 22. The driving force, transmitted to the driven pulley 21, is subsequently transmitted to the rear wheel 6 via the centrifugal clutch mechanism 24, the output shaft 21a and the like.

During traveling of the aforementioned vehicle, the belt 22 and the driving and driven pulleys 20, 21 always make contact with each other in the belt CVT 17. Heat is thereby generated by means of friction among them.

The heat is cooled down by external air inhaled through the cooling duct 50. Specifically, the cooling fan 23 rotates in conjunction with the rotation of the driving pulley 20. In response to the rotation of the cooling fan 23, the pressure in the surrounding of the cooling fan 23 becomes less than the standard atmosphere. The space surrounding the fan 23 is coupled to the cooling duct 50. When the pressure in the surrounding of the fan 23 becomes less than the standard atmosphere, external air is sucked (inhaled) through the opening 52b of the duct body 52. The inhaled air flows through the duct body 52 and the accordion part 51 of the duct body 52, and is inhaled into the power transmission case 18. The inhaled air cools down the components of the belt CVT 17 (especially, the belt 22).

After cooling down the belt 22, the inhaled external air is discharged to the outside of the power transmission case 18 through an external air outlet (not illustrated in the figure) formed in the bottom of the power transmission case 18.

### Characteristics of First Embodiment

(1) In the aforementioned scooter type motorcycle, the rear space 42 is inevitably formed between the storage box 35 and the tail light unit 40. In this case, the rear space 42 is used as a space for disposing the opening 52b of the cooling duct 50. Therefore, it is not necessary especially for a small scooter type motorcycle to provide for a special space for disposing the external air inlet of the cooling duct 50. Consequently, an increase in the entire vehicle size can be avoided.
(2) The rear space 42 is a closed space in which the opening 52b of the cooling duct 50 is disposed. The rear space 42 is enclosed by the assistive grip 27, the maintenance cover 43 and the side covers 32. With this structure, it is possible to inhibit dust and the like from intruding into the rear space 42. Additionally, the assistive grip 27 is positioned above the rear space 42 whereas the maintenance cover 43 is positioned below the rear space 42. The assistive grip 27 and the maintenance cover 43 can be detached from the flame 12 or the side covers 32. Therefore, a maintenance work can be easily performed.
   Furthermore, the assistive grip 27, the maintenance cover 43 and the side covers 32 are not special members provided for closing the rear space 42, but normal members originally provided in the vehicle of this type. Accordingly, the components form a simple structure and do not result in a cost increase.
(3) The opening 52b of the cooling duct 50 is directed to the obliquely downward direction. Therefore, dust, rain and the like do not easily enter the opening 52b from above.

### [Second Embodiment]

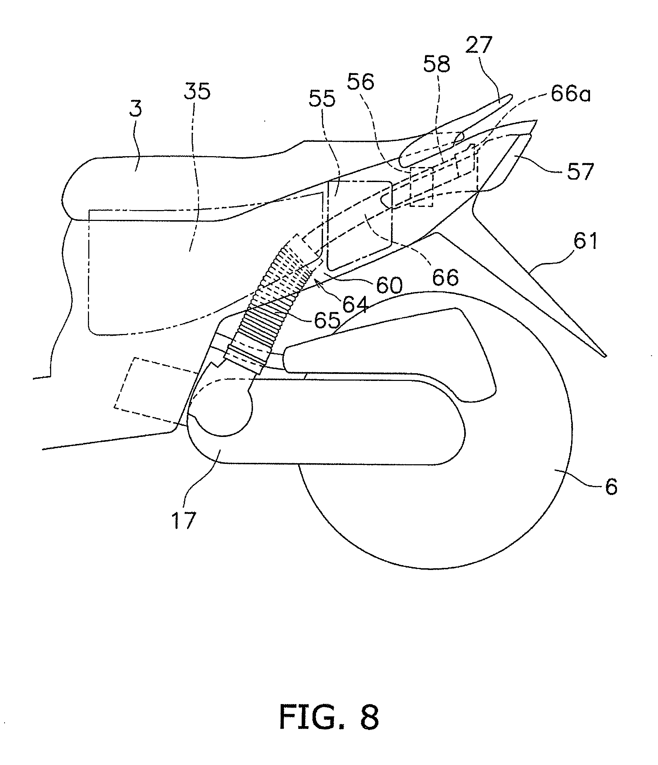

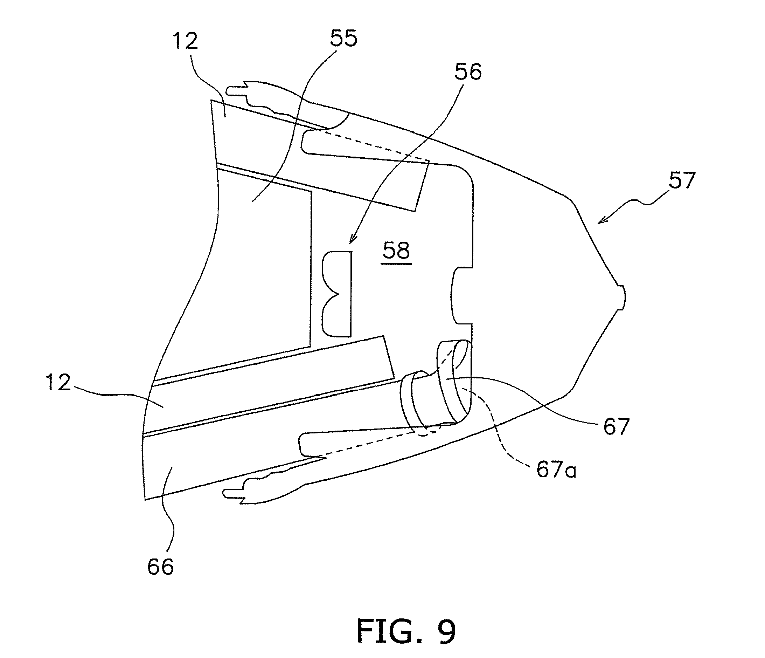

FIGS.8 and 9 illustrate a second embodiment of the present invention. The structure of the rear part of the vehicle in the second embodiment is different from that in the first embodiment. Therefore, only the difference will be hereinafter explained in detail.

In the second embodiment, the storage box 35 and a fuel tank 55 are disposed below the seat 3. The fuel tank 55 is disposed behind the storage box 35. A lock mechanism 56 is disposed behind the fuel tank 55. The lock mechanism 56 is configured to lock/unlock the seat 3 to/from the frame 1 for opening/closing it. Additionally, a tail light unit 57 is disposed behind the lock mechanism 56, while being spaced apart from it. The configuration of the tail light unit 57 is basically the same as that of the first embodiment. The tail light unit 57 is mainly composed of a light bulb, a light bulb holder and a reflecting mirror. The right and left lateral parts of the tail light unit 57 of the second embodiment are forwardly extended. A rear space 58 is thus formed between the tail light unit 57 and behind of the lock mechanism 56.

Additionally, a pair of light and left side covers 60 are laterally provided on the right and left sides of the storage box 35. Note that FIG.8 illustrates only the left side cover 60 whereas FIG.9 omits illustration of both side covers 60. The respective side covers 60 extend from the lateral sides of the storage box 35 to the lateral sides of the fuel tank 55 and the tail light unit 57.

Furthermore, a rear fender 61 is disposed for covering the top of the rear wheel 6. The rear fender 61 covers the top of the rear wheel 6 while extending to a level beneath the storage box 35. Additionally, the right end of the rear fender 61 is connected to the right side cover 60 whereas the left end thereof is connected to the left side cover 60. In the second embodiment, the rear fender 61 and the tail light unit 57 are integrally formed.

In the aforementioned structure, the rear space 58 is provided between the tail light unit 57 and the lock mechanism 56 disposed behind the fuel tank 55 as described above. The rear space 58 is a closed space. Specifically, its top is enclosed by the assistive grip 27 and a top cover disposed longitudinally between the fuel tank 55 and the tail light unit 57. Its bottom is enclosed by the rear fender 61. Furthermore, its right and left lateral sides are enclosed by the side covers 60. Exchange of the light bulb of the tail light unit 57 can be executed by opening the seat 3 and removing the top cover.

Furthermore, the shape of a cooling duct 64 of the second embodiment is different from that of the cooling duct 50 of the first embodiment. However, the basic structure is identical. The cooling duct 64 includes an accordion part 65, a duct body 66 and a tubular member 67. The bottom end of the accordion part 65 is coupled to the power transmission 18. The accordion part 65 extends upwardly therefrom. The bottom end of the duct body 66 is coupled to the accordion part 65. As is shown in FIG.9, the cooling duct 64 is disposed on the transversely outside of the left-side rear frame 12. The duct body 66 of the cooling duct 64 is fixed to the left-side rear frame 12, and includes an opening 67a in its top end. The tubular member 67 is a resin member connected to the opening of the duct body 66. The tubular member 67 is formed in a bulge shape. Specifically, diameter of the opening of the tubular member 67 is increased toward the tip. The opening 67a of the tubular member 67 is preferably positioned in the rear space 58. Additionally, the opening 67a is preferably directed to the inside of the vehicle in an obliquely downward direction. In the second embodiment, however, a position of the tubular member 67 and a direction of the opening 67a can be changed as needed. Therefore, they can be disposed in the most appropriate positions for inhaling external air to be used in a cooling operation.

Furthermore, as illustrated in FIG.9, the opening of the cooling duct 64 (the tubular member 67) is longitudinally positioned behind the rear frame 12. In other words, no frame exists on the transversely lateral sides of the opening of the cooling duct 64. Therefore, increase in the rear part of the vehicle can be avoided even if diameter of the opening of the cooling duct 64 is increased.

The second embodiment achieves the same advantageous effects as the first embodiment.

### [Third Embodiment]

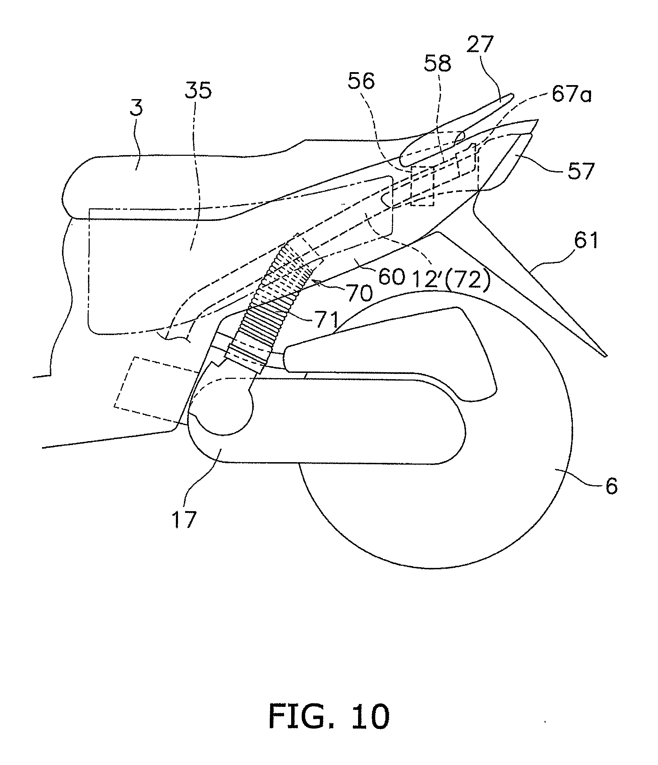

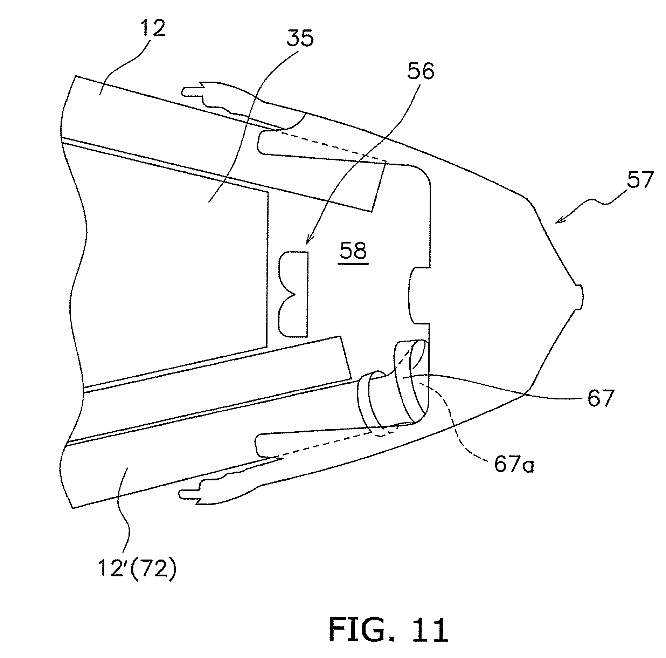

FIGS.10 and 11 illustrate a third embodiment of the present invention. In FIG. 11, the assistive grip 27 is removed from the rear part of the vehicle. The third embodiment is different from the second embodiment in that the fuel tank of the third embodiment is positioned in the same position as that of the first embodiment. Additionally, the structure of the cooling duct of the third embodiment is different from that of the second embodiment. In other words, a cooling duct 70 is formed using a part of the rear frame. The following is a detailed explanation of the difference.

The cooling duct 70 is composed of an accordion part 71 and a duct body 72. The bottom end of the accordion part 71 is coupled to the power transmission case 18. The duct body 72 corresponds to (is formed by) a part of a left rear frame 12'. Each of the right and left rear frames 12, 12' is composed of a pipe. Therefore, external air can flow through the interior of the rear frames 12, 12'. Based on this, the top end of the accordion part 71 is coupled to a rear portion of the left rear frame 12'. A part of the left rear frame 12' is thus used as the duct body 72. Additionally, the tubular member 67 is attached to the tip of the left rear frame 12' (the duct body 72). The tubular member 67 has the same structure as that of the second embodiment. The tubular member 67 includes the opening 67a. Similarly to the second embodiment, the opening 67a is positioned in the rear space 58 between the lock mechanism 56 and the tail light unit 57.

The structure of the third embodiment achieves the same advantageous effects as the first and second embodiments. In addition, the duct body 72 of the cooling duct 70 is formed using a part of the left rear frame 12'. Therefore, the rear part of the vehicle can be compactly formed. Furthermore, it is possible to reduce the number of components required for the vehicle.

Furthermore, as is shown in FIGS. 10 and 11, the opening 67a of the cooling duct 64 (the tubular member 67) is disposed in the lateral part of the tail light unit 57. In other words, the opening 67a is covered with the tail light unit 57 from behind. With this structure, it is possible to inhibit mud and dust, splashed by the rear wheel, from entering the opening 67a.

Moreover, as illustrated in FIG. 10, the lower sides of the right and left side covers 60 are connected through the rear fender 61. Accordingly, it is possible to inhibit mud and dust from entering the vehicle from below.

### OTHER EMBODIMENTS

(a) An important factor of the cooling duct arrangement is the position of the opening of the cooling duct. Therefore, the direction of the opening of the cooling duct is not particularly limited to the aforementioned embodiments.
(b) In the aforementioned embodiments, the assistive grip, the side covers, the maintenance cover, the rear fender and the like are used as components for closing the rear space. However, components to form the closed space are not limited to the above.
(c) In the aforementioned embodiment, the configuration has been exemplified that the light bulb is forwardly pulled out to the rear space when exchange of the light bulb is performed. However, the present invention can be similarly applied to a configuration that the light bulb is rearwardly attached/detached to/from the tail light unit.
(d) In the aforementioned embodiments, the hinge is attached to the front side of the seat, and the lock mechanism locks the rear part of the seat to the vehicle body. However, the present invention can be similarly applied to a configuration that the seat can be detached from the vehicle body and the lock mechanism is disposed in the rear part of the seat.
(e) The structure of the frame is not limited to the structures of the aforementioned embodiments. For example, the lower part of the front frame may be rearwardly curved, and the front end of the rear frame may be positioned forward of the rear end of the front frame.
(f) In accordance with the aforementioned embodiments the lock mechanism and the light bulb of the tail light unit are disposed on a center line perpendicular to a transverse direction of the vehicle, and the second end of the cooling duct is disposed on the left of the center line. The present invention is not limited to such a structure. Rather, the second end of the cooling duct may be disposed off the center line, i.e. either on the left or on the right of the center.

### Explanation of the Reference Numerals

- 1: Frame
- 2: Driving unit
- 3: Seat
- 16: Engine
- 17: Belt continuously variable transmission
- 27: Assistive grip
- 32: Side covers
- 35: Storage box
- 36: Light bulb
- 40, 57: Tail light units
- 41, 56: Lock mechanisms
- 42, 58: Rear spaces
- 43: Maintenance cover
- 50, 64: Cooling ducts
- 52b, 67a: Openings

## Claims

1. A motorcycle, comprising:
a frame (1) extending in a longitudinal direction of the vehicle;
a driving unit (2) pivotably supported by the frame (1), the driving unit (2) comprising an engine (16) and a power transmission case (18) accommodating a belt continuously variable transmission (17) configured to transmit a driving force from the engine (16) to a rear wheel (6);
a seat (3) disposed above the engine (16), the seat (3) configured to be opened/closed;
a storage box (35) disposed under the seat (3);
a lock mechanism (41, 56) disposed behind the storage box (35), the lock mechanism (41, 56) configured to lock the seat (3) to the frame (1);
a pair of right and left side covers (32) for covering at least right and left lateral sides of the storage box (35);
a tail light unit (40, 57) disposed behind the lock mechanism (41, 56), at least a part of the tail light unit (40, 57) disposed between the side covers (32), and
a cooling duct (50, 64, 70) having a first end and a second end, the first end of the cooling duct (50, 64, 70) connected to the power transmission case (18), the second end of the cooling duct (50, 64, 70) having an opening (52b, 67a), the opening (52b, 67a) positioned between the lock mechanism (41, 56) and the tail light unit (40, 57), the opening (52b, 67a) positioned within a space (42) surrounded by the storage box (35), the side covers (32) and the tail light unit (40, 57),
wherein the storage box (35) and the tail light unit (40) are longitudinally disposed one behind the other, and
wherein the space (42) is ensured between the storage box (35) and the tail light unit (40) for disposing the lock mechanism (41) and a wiring of a light bulb (36) of the tail light unit (40) and for allowing the exchange of the light bulb (36) of the tail light unit (40) to be carried out.

2. The motorcycle according to claim 1, wherein the second end of the cooling duct (50) is directed in an obliquely downward direction.

3. The motorcycle according to claim 1 or 2, further comprising a maintenance cover (43) detachably attached to the side covers (32), the maintenance cover (43) enclosing a bottom of the space (42).

4. The motorcycle according to one of claims 1 to 3, further comprising a assistive grip (27) disposed over the space (42).

5. The motorcycle according to one of claims 1 to 4, wherein
a rear part of the seat (3) is configured to be vertically opened/closed about a front end of the seat (3) as a fulcrum, and
the lock mechanism (41, 56) is configured to lock the rear part of the seat (3) to the frame (1).

6. The motorcycle according to one of claims 1 to 5, wherein
the tail light unit (40) includes the light bulb (36) and a holder (37) holding the light bulb (36), the holder (37) configured to be pulled out to the space (42) together with the light bulb (36), and
the second end of the cooling duct (50) is disposed such that it does not transversely overlap the holder (37) when seen in a plan view.

7. The motorcycle according to claim 6, wherein
the lock mechanism (41) and the light bulb (36) of the tail light unit (40) are disposed on a center line perpendicular to a transverse direction of the vehicle, and
the second end of the cooling duct (50) is disposed off the center line.

8. The motorcycle according to one of claims 1 to 7, wherein
the frame (1) includes a rear frame (12) positioned on the right and left sides of the storage box (35), and
the second end of the cooling duct (64) is disposed behind the rear frame (12) in the longitudinal direction of the vehicle.

9. The motorcycle according to one of claims 1 to 8, wherein
the frame (1) includes a rear frame (12) positioned on the right and left sides of the storage box (35), and
the cooling duct (64) is disposed on the outside of the rear frame (12) in the transverse direction.

10. The motorcycle according to one of claims 1 to 8, wherein
the frame (1) includes a rear frame (12) positioned on the right and left sides of the storage box (35), and
the rear frame (12) is formed as a pipe and the cooling duct (70) comprises the part of the rear frame (12) formed as a pipe.

11. The motorcycle according to one of claims 1 to 10,
further comprising a fuel tank (55) disposed behind the storage box (35),
wherein the lock mechanism (56) is disposed behind the fuel tank (55).

12. The motorcycle according to one of claims 1 to 7, wherein at least a part of the opening (52a) of the cooling duct (52) is disposed above a horizontal line passing through a bottom end of the tail light unit (40) in a side view.

## Patentansprüche

1. Ein Motorrad, das folgende Merkmale aufweist:
einen Rahmen (1), der sich in einer Längsrichtung des Fahrzeugs erstreckt;
eine Antriebseinheit (2), die durch den Rahmen (1) schwenkbar getragen ist, wobei die Antriebseinheit (2) einen Motor (16) und ein ein stufenloses Riemengetriebe aufnehmendes Kraftübertragungsgehäuse (18) aufweist, das ausgebildet ist, eine Antriebskraft von dem Motor (16) zu einem Hinterrad (6) zu übertragen;
einen Sitz (3), der oberhalb des Motors (16) angeordnet ist, wobei der Sitz (3) ausgebildet ist, geöffnet/geschlossen zu werden;
ein Aufbewahrungsfach (35), das unter dem Sitz (3) angeordnet ist;
einen Verriegelungsmechanismus (41, 56), der hinter dem Aufbewahrungsfach (35) angeordnet ist, wobei der Verriegelungsmechanismus (41, 56) ausgebildet ist, den Sitz (3) mit dem Rahmen (1) zu verriegeln;
ein Paar einer rechten und linken Seitenabdeckung (32) zum Abdecken zumindest einer rechten und linken lateralen Seite des Aufbewahrungsfachs (35);
eine Schlusslichteinheit (40, 57), die hinter dem Verriegelungsmechanismus (41, 56) angeordnet ist, wobei zumindest ein Teil der Schlusslichteinheit (40, 57) zwischen den Seitenabdeckungen (32) angeordnet ist, und
eine Kühlleitung (50, 64, 70), die ein erstes Ende und ein zweites Ende aufweist, wobei das erste Ende der Kühlleitung (50, 64, 70) mit dem Kraftübertragungsgehäuse (18) verbunden ist, das zweite Ende der Kühlleitung (50, 64, 70) eine Öffnung (52b, 67a) aufweist, die Öffnung (52b, 67a) zwischen dem Verriegelungsmechanismus (41, 56) und der Schlusslichteinheit (40, 57) angeordnet ist, die Öffnung (52b, 67a) innerhalb eines Raums (42) angeordnet ist, der von dem Aufbewahrungsfach (35), den Seitenabdeckungen (32) und der Schlusslichteinheit (40, 57) umgeben ist,
wobei das Aufbewahrungsfach (35) und die Schlusslichteinheit (40) längs hintereinander angeordnet sind, und
wobei der Raum (42) zwischen dem Aufbewahrungsfach (35) und der Schlusslichteinheit (40) gesichert ist, um den Verriegelungsmechanismus (41) und eine Verdrahtung einer Glühlampe (36) der Schlusslichteinheit (40) anzuordnen und ein Ausführen des Austauschs der Glühlampe (36) der Schlusslichteinheit (40) zuzulassen.

2. Das Motorrad gemäß Anspruch 1, bei dem das zweite Ende der Kühlleitung (50) in eine schräg abwärts führende Richtung gerichtet ist.

3. Das Motorrad gemäß Anspruch 1 oder 2, das ferner eine Wartungsabdeckung (43) aufweist, die an den Seitenabdeckungen (32) abnehmbar angebracht ist, wobei die Wartungsabdeckung (43) einen unteren Bereich des Raums (42) umschließt.

4. Das Motorrad gemäß einem der Ansprüche 1 bis 3, das ferner einen Hilfsgriff (27) aufweist, der über dem Raum (42) angeordnet ist.

5. Das Motorrad gemäß einem der Ansprüche 1 bis 4, bei dem
ein hinterer Teil des Sitzes (3) ausgebildet ist, über ein vorderes Ende des Sitzes (3) als Drehpunkt vertikal geöffnet/geschlossen zu werden, und
der Verriegelungsmechanismus (41, 56) ausgebildet ist, den hinteren Teil des Sitzes (3) mit dem Rahmen (1) zu verriegeln.

6. Das Motorrad gemäß einem der Ansprüche 1 bis 5, bei dem
die Schlusslichteinheit (40) die Glühlampe (36) und einen Halter (37), der die Glühlampe (36) hält, umfasst, wobei der Halter (37) ausgebildet ist, zusammen mit der Glühlampe (36) zu dem Raum (42) heraus gezogen zu werden, und
das zweite Ende der Kühlleitung (50) derart angeordnet ist, dass in einer Draufsicht dasselbe den Halter (37) nicht quer überlappt.

7. Das Motorrad gemäß Anspruch 6, bei dem
der Verriegelungsmechanismus (41) und die Glühlampe (36) der Schlusslichteinheit (40) auf einer Mittellinie, die senkrecht zu einer Querrichtung des Fahrzeugs ist, angeordnet sind, und
das zweite Ende der Kühlleitung (50) abseits der Mittellinie angeordnet ist.

8. Das Motorrad gemäß einem der Ansprüche 1 bis 7, bei dem
der Rahmen (1) einen hinteren Rahmen (12), der an der rechten und linken Seite des Aufbewahrungsfachs (35) positioniert ist, umfasst und
das zweite Ende der Kühlleitung (64) in der Längsrichtung des Fahrzeugs hinter dem hinteren Rahmen (12) angeordnet ist.

9. Das Motorrad gemäß einem der Ansprüche 1 bis 8, bei dem
der Rahmen (1) einen hinteren Rahmen (12), der an der rechten und linken Seite des Aufbewahrungsfachs (35) positioniert ist, umfasst und
die Kühlleitung (64) in der Querrichtung an der Außenseite des hinteren Rahmens (12) angeordnet ist.

10. Das Motorrad gemäß einem der Ansprüche 1 bis 8, bei dem
der Rahmen (1) einen hinteren Rahmen (12), der an der rechten und linken Seite des Aufbewahrungsfachs (35) positioniert ist, umfasst und
der hintere Rahmen (12) als eine Röhre gebildet ist und die Kühlleitung (70) den Teil des hinteren Rahmens (12) aufweist, der als eine Röhre gebildet ist.

11. Das Motorrad gemäß einem der Ansprüche 1 bis 10,
das ferner einen Treibstofftank (55) aufweist, der hinter dem Aufbewahrungsfach (35) angeordnet ist,
wobei der Verriegelungsmechanismus (56) hinter dem Treibstofftank (55) angeordnet ist.

12. Das Motorrad gemäß einem der Ansprüche 1 bis 7, bei dem in einer Seitenansicht zumindest ein Teil der Öffnung (52a) der Kühlleitung (52) oberhalb einer horizontalen Linie angeordnet ist, die durch ein unteres Ende der Schlusslichteinheit (40) verläuft.

## Revendications

1. Motocyclette, comprenant:
un châssis (1) s'étendant dans un sens longitudinal du véhicule;
une unité d'entraînement (2) supportée de manière pivotante par le châssis (1), l'unité d'entraînement (2) comprenant un moteur (16) et un carter de transmission de puissance (18) abritant une transmission par courroie variable en continu (17) configurée pour transmettre une force d'entraînement du moteur (16) à une roue arrière (6);
un siège (3) disposé au-dessus du moteur (16), le siège (3) étant configuré de manière à être ouvert/fermé;
une boîte de rangement (35) disposée sous le siège (3);
un mécanisme de verrouillage (41, 56) disposé derrière la boîte de rangement (35), le mécanisme de verrouillage (41, 56) étant configuré pour verrouiller le siège (3) au châssis (1);
une paire de couvercles latéraux droit et gauche (32) destinés à recouvrir au moins les côtés latéraux droit et gauche de la boîte de rangement (35);
une unité de feu arrière (40, 57) disposée derrière le mécanisme de verrouillage (41, 56), au moins une partie de l'unité de feu arrière (40, 57) étant disposée entre les couvercles latéraux (32), et
un conduit de refroidissement (50, 64, 70) présentant une première extrémité et une deuxième extrémité, la première extrémité du conduit de refroidissement (50, 64, 70) étant connectée au boîtier de transmission de puissance (18), la deuxième extrémité du conduit de refroidissement (50, 64, 70) présentant une ouverture (52b, 67a), l'ouverture (52b, 67a) étant positionnée entre le mécanisme de verrouillage (41, 56) et l'unité de feu arrière (40, 57), l'ouverture (52b, 67a) étant positionnée dans un espace (42) entouré par la boîte de rangement (35), les couvercles latéraux (32) et l'unité de feu arrière (40, 57),
dans laquelle la boîte de rangement (35) et l'unité de feu arrière (40) sont disposées longitudinalement l'une derrière l'autre, et
dans laquelle l'espace (42) est assuré entre la boîte de rangement (35) et l'unité de feu arrière (40) pour y disposer le mécanisme de verrouillage (41) et un câblage d'une ampoule (36) de l'unité de feu arrière (40) et pour permettre de réaliser le remplacement de l'ampoule (36) de l'unité de feu arrière (40).

2. Motocyclette selon la revendication 1, dans laquelle la deuxième extrémité du conduit de refroidissement (50) est orientée dans une direction obliquement vers le bas.

3. Motocyclette selon la revendication 1 ou 2, comprenant par ailleurs un couvercle de maintenance (43) fixé de manière amovible aux couvercles latéraux (32), le couvercle de maintenance (43) entourant un fond de l'espace (42).

4. Motocyclette selon l'une des revendications 1 à 3, comprenant par ailleurs une poignée d'assistance (27) disposée au-dessus de l'espace (42).

5. Motocyclette selon l'une des revendications 1 à 4, dans laquelle
une partie arrière du siège (3) est configurée de manière à être ouverte/fermée verticalement autour d'une extrémité avant du siège (3) comme point d'appui, et
le mécanisme de verrouillage (41, 56) est configuré pour verrouiller la partie arrière du siège (3) au châssis (1).

6. Motocyclette selon l'une des revendications 1 à 5, dans laquelle
l'unité de feu arrière (40) comporte l'ampoule (36) et un support (37) maintenant l'ampoule (36), le support (37) étant configuré de manière à être retiré dans l'espace (42) ensemble avec l'ampoule (36), et
la deuxième extrémité du conduit de refroidissement (50) est disposée de sorte qu'elle ne vienne transversalement pas en recouvrement avec le support (37), lorsque vue en vue en plan.

7. Motocyclette selon la revendication 6, dans laquelle
le mécanisme de verrouillage (41) et l'ampoule (36) de l'unité de feu arrière (40) sont disposés sur une ligne centrale perpendiculaire à un sens transversal du véhicule, et
la deuxième extrémité du conduit de refroidissement (50) est disposée décalée par rapport à la ligne centrale.

8. Motocyclette selon l'une des revendications 1 à 7, dans laquelle
le châssis (1) comporte un châssis arrière (12) positionné sur les côtés droit et gauche de la boîte de rangement (35), et
la deuxième extrémité du conduit de refroidissement (64) est disposée derrière le châssis arrière (12) dans le sens longitudinal du véhicule.

9. Motocyclette selon l'une des revendications 1 à 8, dans laquelle
le châssis (1) comporte un châssis arrière (12) positionné sur les côtés droit et gauche de la boîte de rangement (35), et
le conduit de refroidissement (64) est disposé sur le côté extérieur du châssis arrière (12) dans le sens transversal.

10. Motocyclette selon l'une des revendications 1 à 8, dans laquelle
le châssis (1) comporte un châssis arrière (12) positionné sur les côtés droit et gauche de la boîte de rangement (35), et
le châssis arrière (12) est formé sous forme de tuyau et le conduit de refroidissement (70) comprend la partie de châssis arrière (12) formée sous forme de tuyau.

11. Motocyclette selon l'une des revendications 1 à 10,
comprenant par ailleurs un réservoir de carburant (55) disposé derrière la boîte de rangement (35),
dans laquelle le mécanisme de verrouillage (56) est disposé derrière le réservoir de carburant (55).

12. Motocyclette selon l'une des revendications 1 à 7, dans laquelle au moins une partie de l'ouverture (52a) du conduit de refroidissement (52) est disposée au-dessus d'une ligne horizontale passant par une extrémité inférieure de l'unité de feu arrière (40), en vue latérale.
